# FASCICULE DE BREVET EUROPEEN

(11) **EP 2 110 624 B1**
(45) Date de publication et mention de la délivrance du brevet: **11.10.2017**
(21) Numéro de dépôt: 09157534.0
(22) Date de dépôt: 07.04.2009
(51) Int. Cl.: F25B 40/00, B60H 1/32, F28D 7/00, F25B 43/00

(54) **Dispositif combiné comprenant un échangeur de chaleur interne et un accumulateur**
Kombinierte Vorrichtung mit internem Wärmetauscher und Sammler
Combined device comprising an internal heat exchanger and an accumulator

(30) Priorité: 15.04.2008 FR 0802066
(43) Date de publication de la demande: 21.10.2009
(73) Titulaire: Valeo Systèmes Thermiques, 78321 Le Mesnil St Denis Cedex (FR)
(72) Inventeur: Guitari, Imed, 78990, Elancourt (FR)
(74) Mandataire: Metz, Gaëlle

(56) Documents cités:
- EP-A- 0 964 219
- EP-A- 1 418 395
- EP-A- 1 640 676
- EP-A- 1 647 792
- EP-A- 1 724 536
- WO-A-00/46558
- DE-A1-102005 058 153
- FR-A- 2 906 353

## Description

### Domaine technique de l'invention.

La présente invention est du domaine des boucles de climatisation constitutives d'une installation de ventilation, de chauffage et/ou de climatisation d'un véhicule automobile. Elle a pour objet un dispositif combiné comprenant un échangeur de chaleur interne et un accumulateur participant d'une telle boucle. Elle a aussi pour objet une boucle de climatisation comprenant un tel dispositif combiné.

### Etat de la technique.

Un véhicule automobile est couramment équipé d'une installation de ventilation, de chauffage et/ou de climatisation pour réguler les paramètres aérothermiques de l'air contenu à l'intérieur de l'habitacle du véhicule. Une telle installation comporte une boucle de climatisation pour refroidir un flux d'air préalablement à sa délivrance à l'intérieur de l'habitacle. Ladite boucle comprend une pluralité d'éléments à l'intérieur desquels circule successivement un fluide réfrigérant, tel qu'un fluide supercritique, dioxyde de carbone ou R744 notamment. Ces éléments comprennent au moins un compresseur, un refroidisseur de gaz, un échangeur de chaleur interne, un organe de détente, un évaporateur et un accumulateur.

Le fluide réfrigérant circule depuis le compresseur vers le refroidisseur de gaz, puis vers une première branche de l'échangeur de chaleur interne, puis vers l'organe de détente, ensuite vers l'évaporateur, puis vers l'accumulateur, et enfin vers une deuxième branche de l'échangeur de chaleur interne, pour retourner au compresseur.

Le compresseur est destiné à recevoir le fluide réfrigérant à l'état gazeux et à le comprimer pour le porter à haute pression. Le refroidisseur de gaz est apte à refroidir le fluide réfrigérant comprimé, à pression relativement constante, en cédant de la chaleur à son environnement. L'organe de détente est à même d'abaisser la pression du fluide réfrigérant en sortie du refroidisseur de gaz en l'amenant au moins en partie à l'état liquide. L'évaporateur est quant à lui propre à faire passer à l'état gazeux le fluide réfrigérant à l'état liquide provenant de l'organe de détente, à pression relativement constante, en prélevant de la chaleur audit flux d'air qui traverse l'évaporateur. Le fluide réfrigérant vaporisé est ensuite aspiré par le compresseur. Ces dispositions sont telles que le fluide réfrigérant est à haute température et haute pression à l'intérieur de ladite première branche tandis qu'il est à basse température et basse pression à l'intérieur de ladite deuxième branche.

L'accumulateur est destiné à recueillir un reliquat de fluide réfrigérant à l'état liquide en sortie de l'évaporateur. L'échangeur de chaleur interne est configuré de manière à ce que le fluide réfrigérant circulant à l'intérieur de la première branche puisse céder de la chaleur au fluide réfrigérant circulant à l'intérieur de la deuxième branche. A cet effet, le fluide réfrigérant circule en sens opposé à l'intérieur des première et deuxième branches.

Le document EP 1 418 395 (MODINE MANUFACTURING COMPANY) propose d'associer l'échangeur de chaleur interne et l'accumulateur en un dispositif combiné. Dans sa généralité, ce dernier comprend une enceinte qui délimite un volume interne dudit dispositif. L'enceinte est constituée d'un tube et de deux bouchons, l'un inférieur et l'autre supérieur, aptes à obturer les extrémités respectives, inférieure et supérieure, du tube.

La première branche est constituée d'un premier canal de circulation du fluide réfrigérant à haute pression. Le premier canal est conformé en U et s'étend à l'intérieur dudit volume interne. Plus particulièrement, le premier canal s'étend entre une première entrée de fluide réfrigérant à haute pression en provenance du refroidisseur de gaz et une première sortie de fluide réfrigérant à haute pression vers l'organe de détente, qui sont l'une et l'autre ménagées à travers le bouchon supérieur.

La deuxième branche est constituée d'un deuxième canal de circulation du fluide réfrigérant à basse pression. Le deuxième canal est également conformé en U et s'étend à l'intérieur dudit volume interne en étant plaqué contre le premier canal. Une deuxième entrée de fluide réfrigérant à basse pression en provenance de l'évaporateur est ménagée à travers le bouchon supérieur. Ladite deuxième entrée est en communication avec ledit volume interne. Le deuxième canal s'étend entre une ouverture d'admission de fluide réfrigérant en communication avec le volume interne et une deuxième sortie de fluide réfrigérant à basse pression vers le compresseur. Ladite deuxième sortie est également ménagée à travers le bouchon supérieur. Ces dispositions sont telles que le fluide réfrigérant à basse pression est admis à l'intérieur du volume interne à travers ladite deuxième entrée, puis se sépare éventuellement en une phase liquide qui s'accumule au fond de l'enceinte et une phase gazeuse qui occupe le volume résiduel de l'enceinte. Le fluide réfrigérant à l'état gazeux pénètre à l'intérieur du deuxième canal à travers ladite ouverture d'admission, puis circule à travers le deuxième canal pour échanger de la chaleur avec le fluide réfrigérant circulant à contre-courant à l'intérieur du premier canal, puis est évacué hors du dispositif à travers ladite deuxième sortie.

Le bouchon inférieur constitue un bol de réception du fluide réfrigérant à basse pression et à l'état liquide. Le bouchon inférieur est pourvu d'un drain de récupération d'une huile mélangée au fluide réfrigérant pour lubrifier le compresseur.

Un tel dispositif présente des inconvénients au regard d'une complexité structurelle excessive qui mérite d'être simplifiée. De plus, un tel dispositif procure un rendement d'échange thermique entre le fluide réfrigérant circulant à l'intérieur du premier canal et le fluide réfrigérant circulant à l'intérieur du deuxième canal qui mérite d'être amélioré et contrôlé de manière plus précise. Enfin, un tel dispositif est constitué d'un nombre conséquent de pièces disparates ce qui engendre des coûts de fabrication qu'il convient de réduire. Par ailleurs, une boucle de climatisation comportant un tel dispositif présente un rendement thermique global qui mérite d'être amélioré et un encombrement excessif qu'il est souhaitable de réduire.

### Objet de l'invention.

Le but de la présente invention est de proposer un dispositif combiné formé d'un échangeur de chaleur interne et d'un accumulateur constitutifs d'une boucle de climatisation, le dispositif combiné étant constitué d'un nombre de pièces le plus réduit possible, les pièces étant de conformation la plus simple possible, le dispositif combiné procurant un rendement d'échange de chaleur, entre une première branche et une deuxième branche que comporte ledit dispositif, qui soit optimisé et précis, ledit dispositif étant néanmoins le plus compact possible et permettant un stockage optimisé de fluide réfrigérant à basse pression et à l'état liquide à l'intérieur de l'accumulateur. Un autre but de la présente invention est de proposer une boucle de climatisation comportant un tel dispositif combiné dont le rendement thermique global soit amélioré, l'encombrement généré par une telle boucle étant le plus réduit possible.

Le dispositif de la présente invention, défini par la revendication 1 dont le préambule est connu du document WO 00/46558 A, est un dispositif combiné formé d'un échangeur de chaleur interne et d'un accumulateur constitutifs d'une boucle de climatisation à l'intérieur de laquelle circule un fluide réfrigérant. Ledit dispositif combiné comprend une enceinte logeant une réserve de fluide réfrigérant à l'état liquide, au moins un premier canal de circulation du fluide réfrigérant à haute pression et au moins un deuxième canal de circulation du fluide réfrigérant à basse pression.

Selon la présente invention, la réserve est interposée entre deux chambres de réception du fluide réfrigérant à basse pression ménagées à l'intérieur de l'enceinte.

Le dispositif combiné comprend une enceinte qui délimite un volume interne. Ce dernier englobe au moins la réserve, ledit premier canal et ledit deuxième canal. Il en ressort que le volume interne comprend au moins la réserve, ledit premier et ledit deuxième canal.

Les concepteurs de la présente invention ont fait le choix de ménager à l'intérieur de l'enceinte, outre la réserve, ledit premier canal et ledit deuxième canal, deux chambres distinctes de réception du fluide réfrigérant à basse pression. De surcroit, les concepteurs de la présente invention ont fait le choix d'interposer la réserve entre les deux chambres. Ces dispositions permettent de répartir l'entrée et la sortie de fluide réfrigérant à basse pression à l'intérieur de l'enceinte entre les deux chambres et en conséquence de disposer ladite entrée et ladite sortie à distance l'une de l'autre.

La présence de deux chambres distinctes à l'intérieur de l'enceinte favorise l'échange de chaleur entre le premier et le deuxième canal, ce qui procure au dispositif combiné un meilleur rendement d'échange de chaleur.

Les deux chambres comportent avantageusement une conformation respective sensiblement identique l'une à l'autre.

Ces dispositions sont telles que les chambres présentent globalement une géométrie identique de l'une à l'autre des chambres.

Les deux chambres sont préférentiellement d'un volume respectif sensiblement identique l'un à l'autre.

Lesdites chambres sont reliées l'une à l'autre par ledit deuxième canal.

Ledit deuxième canal traverse la réserve.

Ces dispositions sont telles que le deuxième canal s'étend de part et d'autre de la réserve en traversant cette dernière.

L'enceinte est de préférence constituée d'un tube obturé à ses bouts, inférieur et supérieur, par un bouchon respectif, l'un inférieur et l'autre supérieur.

Les chambres sont avantageusement constituées d'une chambre inférieure contiguë ou adjacente au bouchon inférieur et d'une chambre supérieure contiguë ou adjacente au bouchon supérieur.

Ledit premier canal s'étend entre une première entrée de fluide réfrigérant à haute pression qui est ménagée à travers le bouchon inférieur et une première sortie de fluide réfrigérant à haute pression qui est ménagée à travers le bouchon supérieur.

Ces dispositions sont telles que ladite première entrée est ménagée en une zone inférieure du dispositif combiné, ce qui facilite son raccordement aux autres éléments de la boucle de climatisation.

De préférence, une deuxième entrée de fluide réfrigérant à basse pression est ménagée à travers le bouchon supérieur et une deuxième sortie de fluide réfrigérant à basse pression est ménagée à travers le bouchon inférieur, le premier canal s'étendant entre les dites premières entrée et sortie.

Ces dispositions sont telles que le fluide réfrigérant à basse pression est admis à l'intérieur de l'enceinte à travers ladite deuxième entrée pour circuler successivement depuis la chambre supérieure vers le deuxième canal, puis vers la chambre inférieure.

De préférence, le premier canal, le deuxième canal et l'enceinte comportent des axes de symétrie respectifs A1, A2, A qui sont parallèles.

La réserve enveloppe les premier et deuxième canaux.

Il en ressort que la réserve est ménagée autour des premier et deuxième canaux.

La réserve est de préférence délimitée d'une part par une paroi inférieure qui s'étend entre une face interne du tube et les premier et deuxième canaux, et une paroi supérieure portée par les premier et deuxième canaux.

Un espace interstitiel est avantageusement ménagé entre la paroi supérieure et la face interne du tube pour permettre un passage du fluide réfrigérant à basse température et à l'état liquide depuis ladite deuxième entrée vers ladite réserve.

Ladite deuxième entrée est préférentiellement munie d'un conduit rectiligne qui s'étend à l'intérieur de la chambre supérieure.

Ledit conduit est notamment pourvu d'une encoche pour faciliter une séparation du fluide réfrigérant à basse pression en une phase liquide et une phase gazeuse.

Le deuxième canal est de préférence pourvu d'un orifice situé entre les parois inférieure et supérieure de la réserve, avantageusement entre 0 et 10mm au dessus de la paroi inférieur pour permettre une évacuation hors de ladite réserve vers le deuxième canal d'une huile mélangée au fluide réfrigérant.

Ces dispositions sont telles que ledit orifice est susceptible d'être ménagée au plus près de la paroi inférieure pour permettre la meilleure évacuation possible de ladite huile hors de la réserve vers le deuxième canal.

Une portion du deuxième canal, qui s'étend entre la paroi inférieure et la paroi supérieure délimitant la réserve, est avantageusement revêtue d'un matériau thermiquement isolant pour éviter un transfert thermique entre le fluide réfrigérant circulant à l'intérieur du deuxième canal et le fluide réfrigérant stockée à l'intérieur de la réserve. Les premiers et les deuxièmes canaux sont en pluralité, les premiers canaux étant ménagés à travers au moins une première plaque et les deuxièmes canaux étant ménagés à travers au moins une deuxième plaque, la première et la deuxième plaque étant disposées l'une contre l'autre.

De préférence, les premières et deuxièmes plaques sont en pluralité et sont superposées les unes aux autres alternativement.

Les premières et deuxièmes plaques sont avantageusement obtenues par extrusion.

Une boucle de climatisation d'une installation de ventilation, de chauffage et/ou de climatisation d'un véhicule automobile selon la présente invention est reconnaissable en ce qu'elle comporte un tel dispositif combiné.

Ladite boucle comporte préférentiellement un refroidisseur de gaz en relation avec la première entrée de fluide réfrigérant à haute pression, un organe de détente en relation avec la première sortie de fluide réfrigérant à haute pression, un évaporateur qui est en relation avec la deuxième entrée de fluide réfrigérant à basse pression et un compresseur qui est en relation avec la deuxième sortie de fluide réfrigérant à basse pression.

Le dispositif combiné est avantageusement porté par le refroidisseur de gaz.

### Description des figures.

La présente invention sera mieux comprise, et des détails en relevant apparaîtront, à la lecture de la description qui va être faite d'une forme préférée de réalisation en relation avec les figures des planches annexées, dans lesquelles :
La fig.1 est une illustration schématique d'une boucle de climatisation comprenant un dispositif combiné selon la présente invention.
Les fig.2a et fig.2b sont des illustrations schématiques du dispositif combiné représenté sur la figure précédente, selon deux coupes respectives et orthogonales l'une à l'autre.
Les fig.3a à fig.3c sont des illustrations schématiques respectivement de face, de côté et de dessus du dispositif combiné représenté sur les fig.2a et fig.2b associé à un refroidisseur de gaz constitutif de la boucle de climatisation illustré sur la fig.1.

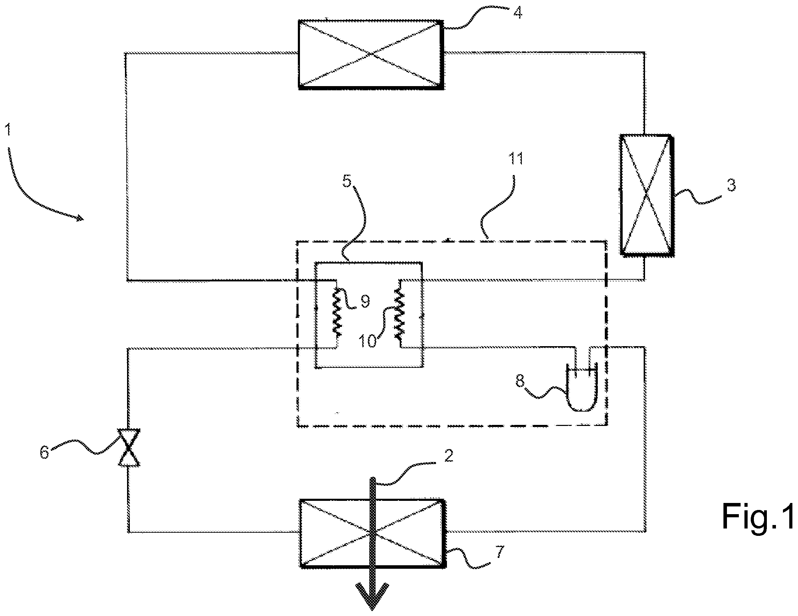

Sur la fig.1, une installation de ventilation, de chauffage et/ou de climatisation équipant un véhicule automobile comporte une boucle de climatisation 1 pour refroidir un flux d'air 2 préalablement à la délivrance de ce dernier 2 à l'intérieur de l'habitacle du véhicule. La boucle de climatisation 1 comprend un compresseur 3, un refroidisseur de gaz 4, un échangeur de chaleur interne 5, un organe de détente 6, un évaporateur 7 et un accumulateur 8 à l'intérieur desquels circule un fluide réfrigérant, tel qu'un fluide supercritique, dioxyde de carbone ou R744 notamment. Plus particulièrement, le fluide réfrigérant circule depuis le compresseur 3 vers le refroidisseur de gaz 4, puis vers une première branche 9 de l'échangeur de chaleur interne 5, puis vers l'organe de détente 6, ensuite vers l'évaporateur 7, puis vers l'accumulateur 8, et enfin vers une deuxième branche 10 de l'échangeur de chaleur interne 5, pour retourner au compresseur 3. Ces dispositions visent à permettre un échange de chaleur entre le fluide réfrigérant circulant à haute pression à l'intérieur de la première branche 9 et le fluide réfrigérant circulant à basse pression à l'intérieur de la deuxième branche 10. L'accumulateur 8, situé en aval de l'évaporateur 7 selon le sens de circulation du fluide réfrigérant à l'intérieur de la boucle de climatisation 1, permet la récupération d'un éventuel reliquat de fluide réfrigérant à l'état liquide en sortie de l'évaporateur 7.

L'échangeur de chaleur interne 5 et l'accumulateur 8 sont associés en un dispositif combiné 11 formant un ensemble monobloc assurant conjointement les fonctions de l'échangeur de chaleur interne 5 et de l'accumulateur 8. Le caractère combiné et monobloc du dispositif combiné 11 permet à l'échangeur de chaleur interne 5 et à l'accumulateur 8 d'être installés simultanément sur la boucle de climatisation 1, ces derniers formant un ensemble intégré.

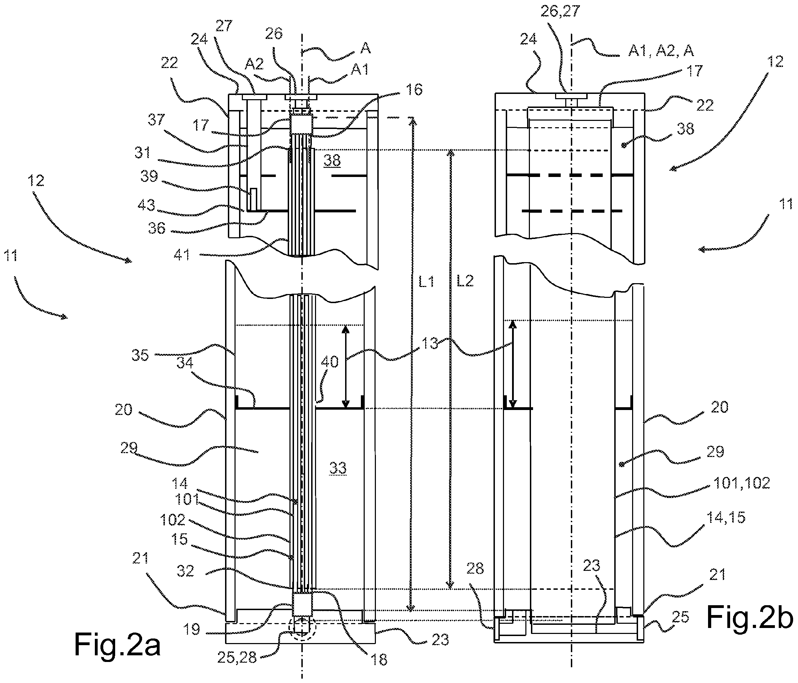

Sur les fig.2a et fig.2b, le dispositif combiné 11 comprend une enceinte 12 logeant une réserve 13 de fluide réfrigérant à l'état liquide, au moins un premier canal 14 de circulation du fluide réfrigérant à haute pression et au moins un deuxième canal 15 de circulation du fluide réfrigérant à basse pression.

Selon la présente invention, la réserve 13 est interposée entre deux chambres 33,38 de réception du fluide réfrigérant à basse pression qui sont ménagées à l'intérieur de l'enceinte 12. Plus particulièrement, cette dernière enceinte 12 délimite un volume interne 29 qui est scindée en trois zones distinctes : une chambre supérieure 38 de réception du fluide réfrigérant à basse pression, la réserve 13 et une chambre inférieure 33 de réception du fluide réfrigérant à basse pression.

Les deux chambres 33 et 38 comportent une conformation respective sensiblement identique l'une à l'autre. Autrement dit, les deux chambres 33,38 présentent une géométrie respective relativement équivalente de l'une à l'autre des deux chambres.

Plus particulièrement, les deux chambres 33 et 38 sont d'un volume respectif relativement équivalent de l'une à l'autre des deux chambres 33 et 38.

Lesdites chambres, inférieure 33 et supérieure 38, sont reliées l'une à l'autre par l'intermédiaire dudit deuxième canal 15. Plus particulièrement, le deuxième canal 15 s'étend à l'intérieur de ladite chambre inférieure 33, puis s'étend à l'intérieur de la réserve 13, puis s'étend à l'intérieur de ladite chambre supérieure 38.

Selon une forme préférée de réalisation de la présente invention, les premiers canaux 14 et les deuxièmes canaux 15 sont en pluralité. Les premiers canaux 14 sont ménagés à travers une première plaque 101 ou tube plat et les deuxièmes canaux 15 sont ménagés à travers une deuxième plaque 102 ou tube plat. Pour permettre un échange de chaleur entre le fluide réfrigérant circulant à l'intérieur des premiers canaux 14 et le fluide réfrigérant circulant à l'intérieur des deuxièmes canaux 15, la première plaque 101 et la deuxième plaque 102 sont disposées l'une contre l'autre et ce en alternance. Préférentiellement et tel qu'illustrée sur les fig.2a et fig.2b, les premières plaques 101 et deuxièmes plaques 102 sont en pluralité et disposées l'une après l'autre en superposition alternée de sorte à former l'alternance suivante : deuxième plaque 102 en appui contre une première plaque 101, elle-même en appui contre une autre deuxième plaque 102, elle-même en appui contre une autre première plaque 101, etc. L'empilement montré à la figure 2a montre donc quatre deuxièmes plaques 102 et trois premières plaques 101. Les premières plaques 101 sont d'une longueur L1 qui est supérieure à une longueur L2 des deuxièmes plaques 102. Ces dispositions sont telles que les premières plaques 101 comportent des extrémités supérieures 16 qui débouchent à l'intérieur d'un collecteur supérieur 17 et des extrémités inférieures 18 qui débouchent à l'intérieur d'un collecteur inférieur 19.

Chaque premier canal 14, chaque deuxième canal 15 et l'enceinte 12 comportent un axe de symétrie respectif A1, A2, A qui sont parallèles les uns aux autres. Une telle structure est simple à réaliser notamment à partir de l'empilement des premières plaques 101 et deuxièmes plaques 102. De telles plaques 101,102 sont notamment réalisées à partir d'un procédé d'extrusion d'un matériau thermiquement conducteur comme l'Aluminium et ses dérivés.

L'enceinte 12 est constituée d'un tube 20, préférentiellement cylindrique, qui est obturé à ses bouts, inférieur 21 et supérieur 22, par un bouchon respectif, inférieur 23 et supérieur 24.

Une première entrée 25 de fluide réfrigérant à haute pression est ménagée à travers le bouchon inférieur 23 et une première sortie 26 de fluide réfrigérant à haute pression est ménagée à travers le bouchon supérieur 24. Ces dispositions sont telles que le fluide réfrigérant à haute pression circule à l'intérieur du dispositif combiné 11 depuis le bas vers le haut, en parcourant un chemin de fluide à haute pression qui est sensiblement rectiligne et parallèle à l'axe de symétrie A de l'enceinte 12.

Une deuxième entrée 27 de fluide réfrigérant à basse pression est ménagée à travers le bouchon supérieur 24 et une deuxième sortie 28 de fluide réfrigérant à basse pression est ménagée à travers le bouchon inférieur 23. Ces dispositions sont telles que le fluide réfrigérant à basse pression circule à l'intérieur du dispositif combiné 11 depuis le haut vers le bas.

Les premiers canaux 14 sont interposés entre les dites premières entrée 25 et sortie 26. Plus particulièrement, la première entrée 25 est en communication avec le collecteur inférieur 19 tandis que la première sortie 26 est en communication avec le collecteur supérieur 17.

Les deuxièmes canaux sont quant à eux interposés entre lesdites deuxièmes entrée 27 et sortie 28. Le fluide réfrigérant à basse pression circule donc depuis la deuxième entrée 27 vers la chambre supérieure 38, puis au travers des deuxièmes canaux 15 qui débouchent dans le volume interne 29 de la chambre inférieure 33, pour finalement pour sortir du dispositif par la deuxième sortie 28.

Il découle de l'ensemble de ces dispositions que le fluide réfrigérant circule à contre-courant entre haute pression et basse pression à l'intérieur du dispositif combiné 11.

Plus particulièrement, le fluide réfrigérant à haute pression pénètre à l'intérieur du dispositif combiné 11 par l'intermédiaire de la première entrée 25 pour circuler à l'intérieur du collecteur inférieur 19, puis à l'intérieur des premiers canaux 14, puis à l'intérieur du collecteur supérieur 17, pour quitter le dispositif combiné 11 par l'intermédiaire de la première sortie 26.

Le fluide réfrigérant à basse pression pénètre à l'intérieur du dispositif combiné 11 par l'intermédiaire de la deuxième entrée 27 ménagée à travers le bouchon supérieur 24, pour être libéré à l'intérieur du volume interne 29 de l'enceinte 12, et plus particulièrement à l'intérieur de la chambre supérieure 38. Le fluide réfrigérant à basse pression et à l'état liquide s'écoule par gravité à l'intérieur de la chambre supérieure 38 jusqu'à être collecté à l'intérieur de la réserve 13 par l'intermédiaire d'un espace interstitiel 43 qui permet une communication entre la chambre supérieure 38 et le réserve 13. Le fluide réfrigérant à basse pression et à l'état gazeux circule librement à l'intérieur de la chambre supérieure 38 jusqu'à pénétrer à l'intérieur des deuxièmes canaux 15 par l'intermédiaire de leurs ouvertures supérieures 31 qui débouchent à l'intérieur de la chambre supérieure 38. Puis le fluide réfrigérant à basse pression et à l'état gazeux circule à l'intérieur des deuxièmes canaux 15 jusqu'à leurs ouvertures inférieures 32 qui débouchent à l'intérieur de la chambre inférieure 33, ménagée entre le bouchon inférieur 23 et une paroi inférieure 34 de la réserve 13. Enfin, le fluide réfrigérant à basse pression et à l'état gazeux quitte le dispositif combiné 11 à travers la deuxième sortie 28 ménagée à travers le bouchon inférieur 23. L'ouverture supérieure 31 et l'ouverture inférieur 32 sont pratiquées à l'extrémité des plaques ou tubes plats 102.

La réserve 13 est délimitée d'une part par ladite paroi inférieure 34 qui s'étend entre une face interne 35 du tube 20 et les premiers 14 et deuxièmes 15 canaux, et une paroi supérieure 36 portée par les premiers canaux 14 et deuxièmes canaux 15. Il en ressort que la réserve 13 est ménagée autour des premiers canaux 14 et deuxièmes canaux 15.

L'espace interstitiel 43 est ménagé entre ladite paroi supérieure 36 et la face interne 35 du tube 20 pour permettre un passage du fluide réfrigérant à basse pression et à l'état liquide depuis ladite deuxième entrée 27 vers ladite réserve 13.

Ladite deuxième entrée 27 est équipée d'un conduit rectiligne 37 qui s'étend à l'intérieur de la chambre supérieure 38 de fluide réfrigérant à basse pression. Ledit conduit rectiligne 37 est pourvu d'une encoche 39 pour faciliter une séparation du fluide réfrigérant à basse pression en une phase liquide et une phase gazeuse.

Ces dispositions sont telles que ladite première branche 9 et ladite deuxième branche 10 illustrée sur la fig.1 sont respectivement constituées des premiers canaux 14 et deuxièmes canaux 15 qui sont préférentiellement ménagées en zone centrale de l'enceinte 12, les axes de symétrie respectifs A1, A2 des premiers 14 et deuxièmes 15 canaux étant notamment confondus avec l'axe de symétrie A de l'enceinte.

Par ailleurs, le fluide réfrigérant véhicule une huile pour lubrifier le compresseur 3. Pour permettre une évacuation de l'huile hors de ladite réserve 13 vers les deuxièmes canaux 15, un orifice 40 est ménagé à travers au moins un des deuxièmes canaux 15, avantageusement celui délimitant l'extérieur de l'échangeur de chaleur interne, autrement dit au travers du tube plat 102 qui touche la paroi inférieure 34. L'orifice 40 est pratiqué dans le deuxième canal 15 correspondant à une distance comprise entre 0 et 10 mm, avantageusement de 0 à 3 mm. Cette fourchette de distance est idéale quelque soit le niveau de fluide réfrigérant à l'état liquide dans la réserve 30.
Ces dispositions sont telles que l'orifice 40 est susceptible d'être ménagé au plus proche de la face supérieure (celle qui regarde le bouchon supérieur 24) de la paroi inférieure 34 pour permettre une aspiration de l'huile dans la zone ou cette dernière est concentrée.

Une portion 41 du deuxième canal 15, qui s'étend entre la paroi inférieure 34 et la paroi supérieure 36, est revêtue d'un matériau thermiquement isolant pour éviter un transfert thermique entre le fluide réfrigérant circulant à l'intérieur du deuxième canal 15 et le fluide réfrigérant stockée à l'intérieur de la réserve 13. Le matériau est principalement collé sur la grande face du tube plat 102 délimitant l'extérieur de l'échangeur de chaleur interne.

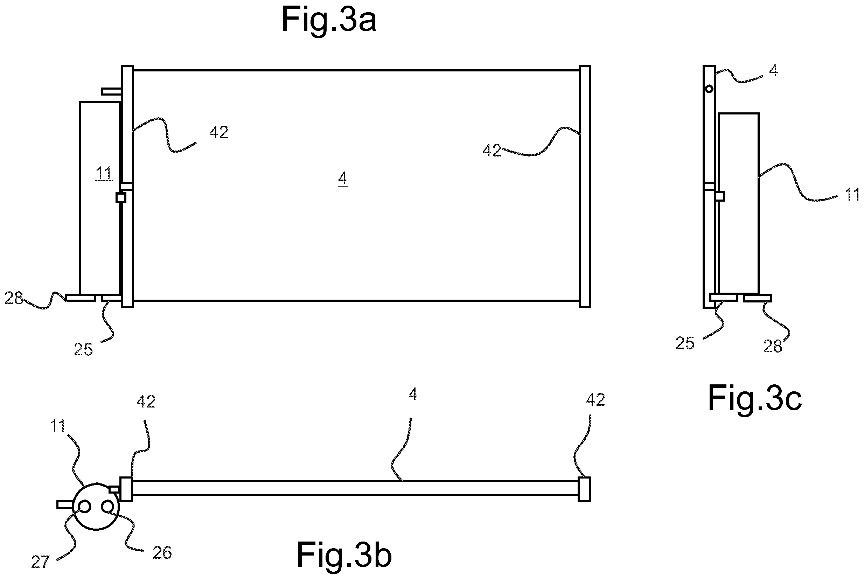

Sur les fig.3a à fig.3c, le dispositif combiné 11 est porté par le refroidisseur de gaz 4 en étant disposé à l'un des bords latéraux 42 de ce dernier 4. Ces dispositions permettent une admission du fluide réfrigérant à haute pression depuis le refroidisseur de gaz 4 vers le dispositif combiné 11 par l'intermédiaire de ladite première entrée 25 qui est disposée au bas du dispositif combiné 11 en regard d'une évacuation correspondante de fluide réfrigérant ménagée en zone inférieure du refroidisseur de gaz.

On notera au cours de la description susvisée que les termes « haut » et « bas », « supérieur » et « inférieur », « au dessus » et « au dessous » d'éléments du dispositif combiné 11 sont à considérer dans une position de ce dernier 11 dans laquelle le fluide réfrigérant à basse pression et à l'état liquide repose sur ladite paroi inférieure 34 de la réserve 13.

## Revendications

1. Dispositif (11) formé d'un échangeur de chaleur interne (5) et d'un accumulateur (8) constitutifs d'une boucle de climatisation à l'intérieur de laquelle circule un fluide réfrigérant, ledit dispositif (11) comprenant une enceinte (12) logeant une réserve (13) de fluide réfrigérant à l'état liquide, ainsi qu'au moins un premier canal (14) de circulation du fluide réfrigérant à haute pression et au moins un deuxième canal (15) de circulation du fluide réfrigérant à basse pression formant l'échangeur de chaleur interne, la réserve (13) étant interposée entre une chambre supérieure (38) et une chambre inférieure (33) de réception du fluide réfrigérant à basse pression ménagées à l'intérieur de l'enceinte (12), **caractérisé en ce que** l'échangeur de chaleur interne (5) comprend une pluralité de premiers canaux (14) ainsi qu'une pluralité de deuxièmes canaux (15), les premiers canaux (14) étant ménagés à travers au moins une première plaque (101) et les deuxièmes canaux (15) étant ménagés à travers au moins une deuxième plaque (102), la première (101) et la deuxième plaque (102) étant disposées l'une contre l'autre, les deuxièmes canaux (15) s'étendant à l'intérieur de la chambre inférieure (33), puis s'étendant à l'intérieur de la réserve (13), puis s'étendant à l'intérieur de la chambre supérieure (38), reliant lesdites chambres (33, 38) l'une à l'autre, la réserve (13) enveloppant les premiers et deuxièmes canaux (14, 15).

2. Dispositif (11) selon la revendication 1, dans lequel l'enceinte (12) est constituée d'un tube (20) obturé à ses bouts, inférieur (21) et supérieur (22), par un bouchon respectif, l'un inférieur (23) et l'autre supérieur (24).

3. Dispositif (11) selon la revendication 2, dans lequel les chambres (33,38) sont constituées d'une chambre inférieure (33) contiguë au bouchon inférieur (23) et d'une chambre supérieure (38) contiguë au bouchon supérieur (24).

4. Dispositif (11) selon l'une quelconque des revendications 2 ou 3, dans lequel ledit premier canal (14) s'étend entre une première entrée (25) de fluide réfrigérant à haute pression qui est ménagée à travers le bouchon inférieur (23) et une première sortie (26) de fluide réfrigérant à haute pression qui est ménagée à travers le bouchon supérieur (24).

5. Dispositif (11) selon l'une quelconque des revendications 2 à 4, dans lequel une deuxième entrée (27) de fluide réfrigérant à basse pression est ménagée à travers le bouchon supérieur (24) et une deuxième sortie (28) de fluide réfrigérant à basse pression est ménagée à travers le bouchon inférieur (23), le deuxième canal (15) présente une ouverture supérieure (31) qui débouche dans la chambre supérieure (38) et une ouverture inférieure (32) qui débouche dans la chambre inférieure (33).

6. Dispositif (11) selon l'une quelconque des revendications précédentes, dans lequel le premier canal (14), le deuxième canal (15) et l'enceinte (12) comportent des axes respectifs A1, A2, A qui sont parallèles.

7. Dispositif (11) selon l'une quelconque des revendications 2 à 6, dans lequel la réserve (13) est délimitée d'une part par une paroi inférieure (34) qui s'étend entre une face interne (35) du tube (20) et l'échangeur de chaleur interne (5), et une paroi supérieure (36) portée par ledit échangeur.

8. Dispositif (11) selon la revendication 7, **caractérisé en ce qu'**un espace interstitiel (43) est ménagé entre la paroi supérieure (36) et la face interne (35) du tube (20) pour permettre un passage du fluide réfrigérant à basse pression et à l'état liquide depuis ladite deuxième entrée (27) vers ladite réserve (30).

9. Dispositif (11) selon l'une quelconque des revendications 7 ou 8, dans lequel le deuxième canal (15) est pourvu d'un orifice (40) située entre 0 et 10 mm au dessus de la face supérieure de la paroi inférieure (34) de la réserve (30) pour permettre une évacuation hors de ladite réserve (30) vers le deuxième canal (15) d'une huile mélangée au fluide réfrigérant.

10. Dispositif (11) selon l'une quelconque des revendications précédentes, dans lequel une portion (41) du deuxième canal (15) est revêtue d'un matériau thermiquement isolant pour éviter un transfert thermique entre le fluide réfrigérant circulant à l'intérieur du deuxième canal (15) et le fluide réfrigérant stockée à l'intérieur de la réserve (30).

11. Dispositif (11) selon l'une quelconque des revendications précédentes, **caractérisé en ce que** les premières (101) et deuxièmes plaques (102) sont en pluralité et sont superposées alternativement les unes aux autres.

12. Boucle de climatisation (1) d'une installation de ventilation, de chauffage et/ou de climatisation d'un véhicule automobile comprenant un dispositif (11) selon l'une quelconque des revendications précédentes.

13. Boucle de climatisation (1) selon la revendication 12, **caractérisé en ce que** le dispositif (11) est porté par le refroidisseur de gaz (4).

## Patentansprüche

1. Vorrichtung (11), die von einem inneren Wärmetauscher (5) und einem Akkumulator (8) gebildet wird, die Bestandteil eines Klimatisierungskreislaufs sind, in dessen Innerem ein Kühlfluid strömt, wobei die Vorrichtung (11) ein Gehäuse (12), in dem ein Vorratsbehälter von Kühlfluid (13) in flüssigem Zustand untergebracht ist, sowie mindestens einen ersten Strömungskanal (14) des Kühlfluids unter Hochdruck und mindestens einen zweiten Strömungskanal (15) des Kühlfluids unter Niederdruck enthält, die den inneren Wärmetauscher bilden, wobei der Vorratsbehälter (13) zwischen eine obere Kammer (38) und eine untere Kammer (33) zur Aufnahme des Kühlfluids unter Niederdruck eingefügt ist, die im Inneren des Gehäuses (12) angeordnet sind, **dadurch gekennzeichnet, dass** der innere Wärmetauscher (5) eine Vielzahl erster Kanäle (14) sowie eine Vielzahl zweiter Kanäle (15) enthält, wobei die ersten Kanäle (14) durch mindestens eine erste Platte (101) hindurch und die zweiten Kanäle (15) durch mindestens eine zweite Platte hindurch (102) eingerichtet sind, wobei die erste (101) und die zweite Platte (102) gegeneinander angeordnet sind, wobei die zweiten Kanäle (15) sich im Inneren der unteren Kammer (33) erstrecken, sich dann im Inneren des Vorratsbehälters (13) erstrecken, sich dann im Inneren der oberen Kammer (38) erstrecken, die Kammern (33, 38) miteinander verbinden, wobei der Vorratsbehälter (13) die ersten und zweiten Kanäle (14, 15) umhüllt.

2. Vorrichtung (11) nach Anspruch 1, wobei das Gehäuse (12) aus einem an seinen unteren (21) und oberen (22) Enden durch einen unteren (23) bzw. oberen (24) Deckel verschlossenen Rohr (20) besteht.

3. Vorrichtung (11) nach Anspruch 2, wobei die Kammern (33, 38) aus einer an den unteren Deckel (23) anschließenden unteren Kammer (33) und einer an den oberen Deckel (24) anschließenden oberen Kammer (38) bestehen.

4. Vorrichtung (11) nach einem der Ansprüche 2 oder 3, wobei der erste Kanal (14) sich zwischen einem ersten Eingang (25) von Kühlfluid unter Hochdruck, der durch den unteren Deckel (23) hindurch eingerichtet ist, und einem ersten Ausgang (26) von Kühlfluid unter Hochdruck erstreckt, der durch den oberen Deckel (24) hindurch eingerichtet ist.

5. Vorrichtung (11) nach einem der Ansprüche 2 bis 4, wobei ein zweiter Eingang (27) von Kühlfluid unter Niederdruck durch den oberen Deckel (24) hindurch eingerichtet ist und ein zweiter Ausgang (28) von Kühlfluid unter Niederdruck durch den unteren Deckel (23) hindurch eingerichtet ist, der zweite Kanal (15) eine obere Öffnung (31), die in die obere Kammer (38) mündet, und eine untere Öffnung (32) aufweist, die in die untere Kammer (33) mündet.

6. Vorrichtung (11) nach einem der vorhergehenden Ansprüche, wobei der erste Kanal (14), der zweite Kanal (15) und das Gehäuse (12) Achsen A1, A2 bzw. A aufweisen, die parallel sind.

7. Vorrichtung (11) nach einem der Ansprüche 2 bis 6, wobei der Vorratsbehälter (13) einerseits durch eine untere Wand (34), die sich zwischen einer Innenseite (35) des Rohrs (20) und dem inneren Wärmetauscher (5) erstreckt, und eine obere Wand (36) begrenzt wird, die vom Tauscher getragen wird.

8. Vorrichtung (11) nach Anspruch 7, **dadurch gekennzeichnet, dass** ein Zwischenraum (43) zwischen der oberen Wand (36) und der Innenseite (35) des Rohrs (20) eingerichtet ist, um einen Durchgang des Kühlfluids unter Niederdruck und in flüssigem Zustand vom zweiten Eingang (27) zum Vorratsbehälter (30) zu erlauben.

9. Vorrichtung (11) nach einem der Ansprüche 7 oder 8, wobei der zweite Kanal (15) mit einer Öffnung (40) versehen ist, die sich zwischen 0 und 10 mm oberhalb der Oberseite der unteren Wand (34) des Vorratsbehälters (30) befindet, um eine Abfuhr eines mit dem Kühlfluid vermischten Öls aus dem Vorratsbehälter (30) zum zweiten Kanal (15) zu erlauben.

10. Vorrichtung (11) nach einem der vorhergehenden Ansprüche, wobei ein Abschnitt (41) des zweiten Kanals (15) mit einem thermisch isolierenden Material bedeckt ist, um einen Wärmetransfer zwischen dem im Inneren des zweiten Kanals (15) strömenden Kühlfluid und dem im Inneren des Vorratsbehälters (30) gespeicherten Kühlfluid zu vermeiden.

11. Vorrichtung (11) nach einem der vorhergehenden Ansprüche, **dadurch gekennzeichnet, dass** die ersten (101) und zweiten Platten (102) in Mehrzahl vorhanden und alternativ übereinander angeordnet sind.

12. Klimatisierungskreislauf (1) einer Lüftungs-, Heizungs- und/oder Klimatisierungsanlage eines Kraftfahrzeugs, die eine Vorrichtung (11) nach einem der vorhergehenden Ansprüche enthält.

13. Klimatisierungskreislauf (1) nach Anspruch 12, **dadurch gekennzeichnet, dass** die Vorrichtung (11) vom Gaskühler (4) getragen wird.

## Claims

1. Device (11) formed by an internal heat exchanger (5) and by an accumulator (8) that make up an air-conditioning loop inside which a refrigerant circulates, said device (11) comprising an enclosure (12) housing a reserve (13) of refrigerant in the liquid state, and at least a first channel (14) for circulating the refrigerant at high pressure and at least a second channel (15) for circulating the refrigerant at low pressure, forming the internal heat exchanger, the reserve (13) being interposed between an upper chamber (38) and a lower chamber (33) for receiving the low-pressure refrigerant that are formed inside the enclosure (12), **characterized in that** the internal heat exchanger (5) comprises a plurality of first channels (14) and a plurality of second channels (15), the first channels (14) being formed through at least one first plate (101) and the second channels (15) being formed through at least one second plate (102), the first (101) and the second plate (102) being arranged against one another, the second channels (15) extending inside the lower chamber (33), then extending inside the reserve (13), then extending inside the upper chamber (38), connecting said chambers (33, 38) to one another, the reserve (13) enveloping the first and second channels (14, 15).

2. Device (11) according to Claim 1, in which the enclosure (12) is constituted by a tube (20) closed off at its lower (21) and upper (22) ends by a respective plug, one a lower plug (23) and the other an upper plug (24).

3. Device (11) according to Claim 2, in which the chambers (33, 38) are constituted by a lower chamber (33) contiguous with the lower plug (23) and by an upper chamber (38) contiguous with the upper plug (24).

4. Device (11) according to either one of Claims 2 and 3, in which said first channel (14) extends between a first high-pressure refrigerant inlet (25) which is formed through the lower plug (23) and a first high-pressure refrigerant outlet (26) which is formed through the upper plug (24).

5. Device (11) according to any one of Claims 2 to 4, in which a second low-pressure refrigerant inlet (27) is formed through the upper plug (24) and a second low-pressure refrigerant outlet (28) is formed through the lower plug (23), the second channel (15) has an upper opening (31) which opens into the upper chamber (38) and a lower opening (32) which opens into the lower chamber (33).

6. Device (11) according to any one of the preceding claims, in which the first channel (14), the second channel (15) and the enclosure (12) comprise respective axes A1, A2, A which are parallel.

7. Device (11) according to any one of Claims 2 to 6, in which the reserve (13) is delimited on the one hand by a lower wall (34) which extends between an internal face (35) of the tube (20) and the internal heat exchanger (5), and an upper wall (36) borne by said exchanger.

8. Device (11) according to Claim 7, **characterized in that** an interstitial space (43) is formed between the upper wall (36) and the internal face (35) of the tube (20) to allow low-pressure refrigerant in the liquid state to pass from the said second inlet (27) towards said reserve (30).

9. Device (11) according to either one of Claims 7 and 8, in which the second channel (15) is provided with an orifice (40) situated between 0 and 10 mm above the upper face of the lower wall (34) of the reserve (30) to allow an oil mixed with the refrigerant to be discharged out of said reserve (30) towards the second channel (15).

10. Device (11) according to any one of the preceding claims, in which a portion (41) of the second channel (15) is coated with a thermally insulating material to avoid thermal transfer between the refrigerant circulating inside the second channel (15) and the refrigerant stored inside the reserve (30).

11. Device (11) according to any one of the preceding claims, **characterized in that** the first (101) and second plates (102) are present in a plurality and are alternately superposed on one another.

12. Air-conditioning loop (1) of a heating, ventilation and/or air-conditioning installation of a motor vehicle comprising a device (11) according to any one of the preceding claims.

13. Air-conditioning loop (1) according to Claim 12, **characterized in that** the device (11) is borne by the gas cooler (4).
